# EUROPÄISCHE PATENTSCHRIFT

(11) **EP 3 595 948 B1**
(45) Veröffentlichungstag und Bekanntmachung des Hinweises auf die Patenterteilung: **25.12.2024**
(21) Anmeldenummer: 18703249.5
(22) Anmeldetag: 25.01.2018
(51) Int. Cl.: B60T 8/36

(54) **HYDRAULIKBLOCK FÜR EINE HYDRAULISCHEN FREMDKRAFT-FAHRZEUGBREMSANLAGE**
HYDRAULIC BLOCK FOR A HYDRAULIC POWER BRAKE SYSTEM OF A MOTOR VEHICLE
BLOC HYDRAULIQUE POUR UN SYSTÈME DE FREINAGE HYDRAULIQUE À ACTIONNEMENT PAR UNE FORCE EXTÉRIEURE D'UN VÉHICULE

(30) Priorität: 16.03.2017 DE 102017204407
(43) Veröffentlichungstag der Anmeldung: 22.01.2020
(73) Patentinhaber: Robert Bosch GmbH, 70442 Stuttgart (DE)
(72) Erfinder: TANDLER, Juergen, 87629 Fuessen (DE); MAYR, Matthias, 87549 Rettenberg (DE); WEH, Andreas, 87477 Sulzberg (DE)
(86) Internationale Anmeldenummer: PCT/EP2018/051817
(87) Internationale Veröffentlichungsnummer: WO 2018/166687

(56) Entgegenhaltungen:
- WO-A1-2013/023953
- WO-A1-2013/023953
- WO-A1-2017/137135
- WO-A1-2017/137135
- WO-A1-2018/099747
- DE-A1- 102014 213 732
- DE-A1- 102014 213 732
- US-A1- 2015 061 361
- US-A1- 2015 061 361

## Beschreibung

Die Erfindung betrifft einen Hydraulikblock für eine hydraulische Fremdkraft-Fahrzeugbremsanlage mit den Merkmalen des Oberbegriffs des Anspruchs 1, insbesondere für eine schlupfgeregelte hydraulische Fremdkraft-Fahrzeugbremsanlage.

### Stand der Technik

Schlupfregelungen sind beispielsweise Blockierschutz-, Antriebsschlupf- und/oder Fahrdynamikregelungen/elektronische Stabilitätsprogramme, für die die Abkürzungen ABS, ASR, FDR/ESP gebräuchlich sind. Solche Schlupfregelungen hydraulischer Fahrzeugbremsanlagen für Personenkraftwagen und Krafträder sind bekannt und werden hier nicht näher erläutert.

Die Offenlegungsschrift DE 10 2006 059 924 A1 offenbart einen Hydraulikblock für eine schlupfgeregelte hydraulische Muskel- oder Hilfskraft-Fahrzeugbremsanlage. Der Hydraulikblock ist ein quaderförmiger Block aus Metall, der zu einer mechanischen Befestigung und hydraulischen Verschaltung hydraulischer Bauelemente der Schlupfregelung dient. Mit Verschaltung ist eine Verbindung der hydraulischen Bauelemente entsprechend einem hydraulischen Schaltplan der Schlupfregelung gemeint. Hydraulische Bauelemente sind beispielsweise Hydropumpen, Magnetventile, Rückschlagventile, Hydrospeicher, Dämpferkammern, Drucksensoren. Der Hydraulikblock weist Aufnahmen für die hydraulischen Bauelemente auf, wobei die Aufnahmen typischerweise zylindrische, meist durchmessergestufte Ansenkungen, Sacklöcher oder Durchgangslöcher sind, in die die hydraulischen Bauelemente eingebracht und durch Verstemmen druckdicht befestigt werden. Die Aufnahmen für die hydraulischen Bauelemente sind durch Bohrungen im Hydraulikblock miteinander verbunden. Außen am Hydraulikblock wird ein Elektromotor zum Antrieb der Hydropumpen und ein elektronisches Steuergerät zur Steuerung der hydraulischen Bauelemente angebracht. Außerdem weist der Hydraulikblock Anschlüsse für einen Hauptbremszylinder und für Radbremsen auf. Auch hierbei handelt es sich typischerweise um zylindrische, durchmessergestufte Ansenkungen, in die Anschlussnippel von Bremsleitungen eingepresst und druckdicht verstemmt oder Schraubnippel eingeschraubt werden. In letzterem Fall weisen die Ansenkungen Innengewinde auf. Bestückt mit den hydraulischen Bauelementen bildet der Hydraulikblock das oder jedenfalls ein Kernstück einer Schlupfregelung. Bei Anschluß an einen Hauptbremszylinder ohne Bremskraftverstärker handelt es sich um eine hydraulische Muskelkraft-Fahrzeugbremsanlage und bei Anschluss an einen Hauptbremszylinder mit beispielsweise einem Unterdruck-Bremskraftverstärker um eine hydraulische Hilfskraft-Fahrzeugbremsanlage.

Eine schlupfgeregelten hydraulische Fremdkraft-Fahrzeugbremsanlage offenbart die internationale Patentanmeldung WO 2012/150 120 A1. Bei dieser Fahrzeugbremsanlage weist der Hydraulikblock ebenfalls Aufnahmen für hydraulische Bauelemente der Schlupfregelung und Anschlüsse für Radbremsen auf. Anstatt Anschlüssen für einen Hauptbremszylinder weist der bekannte Hydraulikblock Anschlüsse für einen Bremsflüssigkeitsvorratsbehälter auf. Der Hydraulikblock wird nicht an einen Hauptbremszylinder angeschlossen, sondern der Hauptbremszylinder wird in eine Hauptbremszylinderbohrung im Hydraulikblock eingebaut. Außerdem weist der bekannte Hydraulikblock eine Fremdkraftzylinderbohrung auf, in die eine Kolben-Zylinder-Einheit für eine Fremdkraft-Druckerzeugung eingebaut wird. Zu einer Druckerzeugung wird ein Kolben der Kolben-Zylinder-Einheit von einem Elektromotor über ein mechanisches Rotation-Translation-Umsetzungsgetriebe gegebenenfalls unter Zwischenschaltung eines mechanischen Untersetzungsgetriebes in einem Zylinder der Kolben-Zylinder-Einheit verschoben. Die internationale Patentanmeldung zeigt einen Schaltplan der Fremdkraft-Fahrzeugbremsanlage, Gestaltung und Verbohrung des Hydraulikblocks sind nicht offenbart.

Die Offenlegungsschrift DE 10 2014 213 732 A1 offenbart einen flachen, quaderförmigen Hydraulikblock für ein Hydraulikaggregat einer schlupfgeregelten hydraulischen Fremdkraft-Fahrzeugbremsanlage, in dem quer durchgehend von einer zu einer gegenüberliegenden Längsseite nahe einer Querseite eine Hauptbremszylinderbohrung angebracht ist. Anschlüsse für hydraulische Radbremsen sind entlang der einen Querseite zwischen der Hauptbremszylinderbohrung und der Querseite in einer großen Seite des Hydraulikblocks angebracht, die zur Anbringung eines Elektromotors vorgesehen ist, der zum Verschieben eines sogenannten Plungerkolben zu einer Bremsdruckerzeugung mit Fremdkraft vorgesehen ist. Eine gegenüberliegende große Seite des bekannten Hydraulikblocks weist Aufnahmen für Magnetventile der Schlupfregelung zwischen der Hauptbremszylinderbohrung und einer anderen Querseite auf.

Die internationale Patentanmeldung WO 2013/023 953 A1 offenbart ein Hydraulikaggregat für eine schlupfgeregelte hydraulische Fremdkraft-Fahrzeugbremsanlage mit einem Hydraulikblock, in dem Anschlüsse für Radbremsen entlang einer Längsseite angeordnet sind.

Die nachveröffentlichte internationale Patentanmeldung WO 2018/166 687 A1 offenbart einen Hydraulikblock für eine schlupfgeregelte hydraulische Fremdkraft-Fahrzeugbremsanlage mit einer Hauptbremszylinderbohrung in einer Mitte zwischen zwei großen Seiten des Hydraulikblocks und einer Fremdkraftzylinderbohrung senkrecht zur Hauptbremszylinderbohrung durch die beiden großen Seiten des Hydraulikblocks. Vier Anschlüsse für Radbremsen sind in einer der beiden großen Seite des Hydraulikblocks angeordnet, wobei drei der Anschlüsse entlang einer Längsseite und ein vierter Anschluss in Richtung einer gegenüberliegenden Längsseite des Hydraulikblocks versetzt angeordnet ist.

### Offenbarung der Erfindung

Der erfindungsgemäße Hydraulikblock mit den Merkmalen des Anspruchs 1 ist für eine hydraulische, insbesondere schlupfgeregelte Fremdkraft-Fahrzeugbremsanlage vorgesehen, er weist die Form eines Quaders auf und besteht insbesondere aus Metall. Er weist eine Hauptbremszylinderbohrung für einen Einbau eines Hauptbremszylinders auf, der Einbau erfolgt insbesondere durch Einpressen des Hauptbremszylinders in die Hauptbremszylinderbohrung. Der Hauptbremszylinder ist insbesondere muskelkraftbetätigbaren, eine Bremskraftverstärkung kann durch eine Fremdkraftbetätigung der Fahrzeugbremsanlage erfolgen. Des Weiteren weist der erfindungsgemäße Hydraulikblock Anschlüsse für hydraulische Radbremsen der Fahrzeugbremsanlage auf. Die Anschlüsse für die Radbremsen sind erfindungsgemäß an bzw. in einer der beiden großen Seiten des quaderförmigen Hydraulikblocks und entlang einer Längsseite des Hydraulikblocks angeordnet, wobei ein Anschluss für eine Radbremse in Richtung einer gegenüberliegenden Längsseite versetzt angeordnet ist. "Entlang" meint eine Anordnung der Anschlüsse in einer geraden oder auch eckigen Linie nahe an der Längseite oder der Querseite des Hydraulikblocks in einem Abstand von nicht mehr als etwa einem oder zwei Durchmessern der Anschlüsse. Ein Abstand der Anschlüsse für die Radbremsen von der Längsseite oder der Querseite des Hydraulikblocks ist jedenfalls vorzugsweise nur ein Bruchteil ihres Abstands von einer Längsmittelebene oder einer Quermittelebene des Hydraulikblocks.

Der erfindungsgemäße Hydraulikblock ist an eine Einbausituation in einem Motorraum eines Kraftwagens angepasst. Ein Vorteil des erfindungsgemäßen Hydraulikblocks ist die Möglichkeit, ihn in einen vorgesehenen Einbauraum bzw. Einbaubereich in einem Motorraum eines Kraftwagens unterbringen und im Motorraum verlegte Bremsleitungen von Radbremsen ohne oder mit nur wenigen Modifikationen an den Hydraulikblock anschließen zu können. Auch ein am Hydraulikblock angebrachtes elektronisches Steuergerät zur Steuerung oder Regelung einer Fremdkraftbremsung und für die Schlupfregelung lässt sich ohne oder mit wenig Modifikationen zur Stromversorgung an ein elektrisches Bordnetz des Kraftwagens und an elektronische Bauteile wie Raddrehsensoren, Beschleunigungssensoren und Drehsensoren anschließen.

Die Unteransprüche haben vorteilhafte Ausgestaltungen und Weiterbildungen der im Anspruch 1 angegebenen Erfindung zum Gegenstand.

### Kurze Beschreibung der Zeichnung

Die Erfindung wird nachfolgend anhand einer in der Zeichnung dargestellten Ausführungsformen näher erläutert. Es zeigen:
- Figur 1: einen nicht erfindungsgemäßen Hydraulikblock in einer perspektivischen Darstellung mit Blick auf eine Motorseite;
- Figur 2: den Hydraulikblock aus Figur 1 in perspektivischer Darstellung mit Blick auf eine der Motorseite gegenüberliegende Ventilseite;
- Figur 3: eine abgewandelte Ausführungsform eines Hydraulikblocks gemäß der Erfindung mit einer Figur 1 entsprechenden Blickrichtung.

Die Zeichnung ist eine vereinfachte und schematisierte Darstellung zum Verständnis und zur Erläuterung der Erfindung.

### Ausführungsform der Erfindung

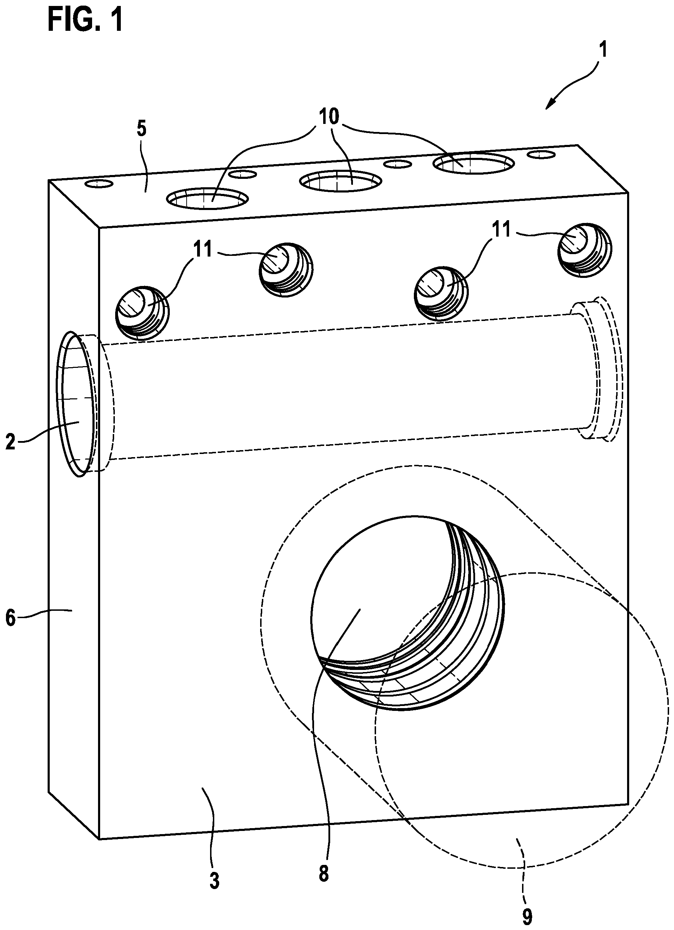

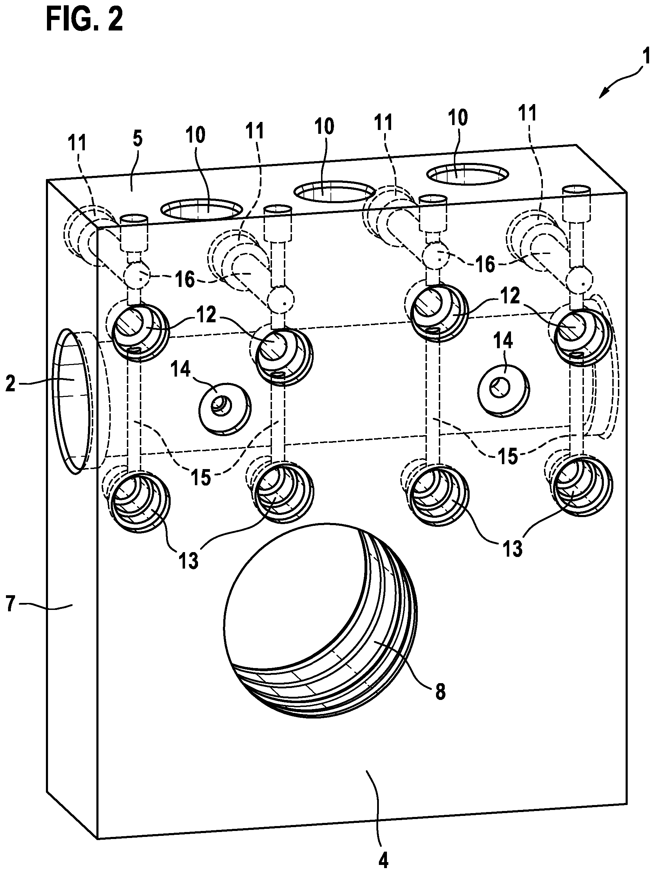

Der in Figuren 1 und 2 dargestellte Hydraulikblock 1 ist für ein Hydraulikaggregat einer hydraulischen Fremdkraft-Fahrzeugbremsanlage, die eine Schlupfregelung aufweist, vorgesehen. Die Fahrzeugbremsanlage selbst ist nicht dargestellt. Schlupfregelungen sind an sich bekannt beispielsweise als Blockierschutz-, Antriebsschlupf- und/oder Fahrdynamikregelungen/elektronische Stabilitätsprogramme, für die die Abkürzungen ABS, ASR, FDR/ESP gebräuchlich sind. Sie werden hier nicht näher erläutert.

Der Hydraulikblock 1 ist ein quaderförmiger Metallblock, der länger als breit und breiter als dick ist. Er weist eine Hauptbremszylinderbohrung 2 auf, die zu einem Einbau eines nicht gezeichneten, muskelkraftbetätigbaren Hauptbremszylinders vorgesehen ist. Der Hauptbremszylinder wird in die Hauptbremszylinderbohrung 2 eingepresst und druckdicht verstemmt. Die Hauptbremszylinderbohrung 2 verläuft parallel zu zwei großen Seiten 3, 4 und zu zwei Querseiten 5 des Hydraulikblocks 1 und ist an zwei Längsseiten 6, 7 des Hydraulikblocks 1 offen. Die Hauptbremszylinderbohrung 2 ist zwischen einer Quermittelebene und einer der beiden Querseiten 5 im Hydraulikblock 1 angebracht. In der gezeichneten Ausführungsform befindet sich die Hauptbremszylinderbohrung 2 näher an der Quermittelebene des Hydraulikblocks 1 als an der Querseite 5. Die Quermittelebene verläuft in einer Mitte zwischen den Querseiten 5 und parallel zu den Querseiten 5.

Zu einer Bremsdruckerzeugung mit Fremdkraft ist eine nicht dargestellte Kolben-Zylinder-Einheit mit einem sogenannten Plungerkolben, der in einem Fremdkraftzylinder verschiebbar ist, vorgesehen. Für einen Einbau des nicht gezeichneten Fremdkraftzylinders weist der Hydraulikblock 1 eine Fremdkraftzylinderbohrung 8 auf, die den Hydraulikblock 1 von einer zu einer gegenüberliegenden großen Seite 3, 4 durchsetzt und die an beiden großen Seiten 3, 4 offen ist. Die Fremdkraftzylinderbohrung 8 ist nahe der Quermittelebene auf einer der Hauptbremszylinderbohrung 2 gegenüberliegenden Seite der Quermittelebene und etwas seitlich versetzt zu einer Längsmittelebene des Hydraulikblocks 1 im Hydraulikblock 1 angebracht. Die Längsmittelebene verläuft in einer Mitte zwischen und parallel zu den Längsseiten 6, 7 des Hydraulikblocks 1. Der nicht gezeichnete Fremdkraftzylinder wird in die Fremdkraftzylinderbohrung 8 eingepresst und druckdicht verstemmt.

Zu einer Verschiebung des nicht gezeichneten Plungerkolbens im Fremdkraftzylinder ist ein Elektromotor als Pumpenmotor 9 vorgesehen, der über ein Planetengetriebe als Untersetzungsgetriebe und ein Schraubgetriebe den Plungerkolben im Fremdkraftzylinder verschiebt. Der Pumpenmotor 9 ist in Figur 1 mit Strichlinien angedeutet, er wird koaxial zur Fremdkraftzylinderbohrung 8 außen an einer der beiden großen Seiten 3 des Hydraulikblocks 1 befestigt. Die große Seite 3 kann auch als Motorseite des Hydraulkblocks 1 bezeichnet werden.

In einer Querseite 5 weist der Hydraulikblock 1 Anschlüsse 10 für einen nicht dargestellten, drucklosen Bremsflüssigkeitsvorratsbehälter auf. Die Anschlüsse 10 sind Sacklöcher in der Querseite 5 des Hydraulikblocks 1, in die komplementäre, zylindrische Anschlussstutzen des Bremsflüssigkeitsvorratsbehälters gesteckt werden, die mit Dichtringen in den Anschlüssen 10 abgedichtet sind und den Bremsflüssigkeitsvorratsbehälter mechanisch an der Querseite 5 des Hydraulikblocks 1 halten.

Der Hydraulikblock 1 ist zu einem stehenden Einbau in einen Motorraum eines Kraftwagens vorgesehen, das heißt die Querseite 5 mit den Anschlüssen 10 für den Bremsflüssigkeitsvorratsbehälter befindet sich oben und die Längsseiten 6, 7 und die großen Seiten 3, 4 verlaufen vertikal. Der Hydraulikblock 1 kann auch etwas schräg eingebaut werden, so das die Längsseiten 6, 7 und die großen Seiten 3, 4 in spitzen Winkeln zu vertikalen Ebenen verlaufen.

In der großen Seite 3, die zur Befestigung des Pumpenmotors 9 vorgesehen ist, weist der Hydraulikblock 1 Anschlüsse 11 für nicht gezeichnete, hydraulische Radbremsen auf. Die Anschlüsse 11 sind zylindrische Sacklöcher mit Innengewinden zu einem Anschluss von Bremsleitungen, die zu den Radbremsen führen, mit Schraubnippeln. Möglich sind beispielsweise auch Anschlüsse 11 ohne Innengewinde zu einem Einpressen von Einpressnippeln. Die Anschlüsse 11 sind auf einer gedachten Linie entlang der Querseite 5 mit den Anschlüssen 10 für den Bremsflüssigkeitsvorratsbehälter in der großen Seite 3 des Hydraulikblocks 1 angeordnet. Die Linie, auf der die Anschlüsse 11 für die Radbremsen angeordnet sind, kann gerade sein und parallel zur Querseite 5 verlaufen, in der in Figuren 1 und 2 gezeichneten Ausführungsform ist die Linie wenig mit einem Winkel von etwa 160 bis 170° an den Anschlüssen 11 abgewinkelt. Ein Abstand der Anschlüsse 11 von der Querseite 5 des Hydraulikblocks 1 ist nicht größer als das Doppelte oder maximal das 2,5-fache ihres Durchmessers, was auch als Anordnung der Anschlüsse 11 nahe der Querseite 5 aufgefasst werden kann. Die Anschlüsse 11 für die Radbremsen befinden sich außerhalb einer von dem Pumpenmotor 9 überdeckten Fläche der großen Seite 3 des Hydraulikblocks 1.

Der Hydraulikblock 1 weist Aufnahmen 12, 13, 14 für Magnetventile, Rückschlagventile, Hydrospeicher, Dämpferkammern, Drucksensoren und dergleichen hydraulische Bauelemente der Schlupfregelung auf, die der Übersichtlichkeit wegen nicht alle gezeichnet sind. Die Aufnahmen 12, 13, 14 sind zylindrische Sacklöcher und zylindrische Ansenkungen, in die die nicht gezeichneten Bauelemente eingepresst und druckdicht verstemmt sind.

In der großen Seite 4, die der großen Seite 3, die zur Befestigung des Pumpenmotors 9 vorgesehen ist, gegenüber liegt, weist der Hydraulikblock 1 Aufnahmen 12 für Einlassventile, Aufnahmen 13 für Auslassventile und Aufnahmen 14 für Drucksensoren der Schlupfregelung auf. Die Einlassventile und die Auslassventile sind Magnetventile. Die Aufnahmen 12, 13 für die Einlassventile und für die Auslassventile sind entlang der Hauptbremszylinderbohrung 2 in der großen Seite 4 des Hydraulikblocks 1 angeordnet, und zwar senkrecht zur großen Seite 4 des Hydraulikblocks 1 gesehen sind die Aufnahmen 12 für die Einlassventile auf einer und die Aufnahmen 13 für die Auslassventile auf einer gegenüberliegenden Seite der Hauptbremszylinderbohrung 2 in der großen Seite 4 des Hydraulikblocks 1 angebracht. Senkrecht zur großen Seite 4 gesehen können die Aufnahmen 12, 13 für die Einlassventile und die Auslassventile die Hauptbremszylinderbohrung 2 überdecken, sie sind jedoch so kurz, dass sie nicht in die Hauptbremszylinderbohrung 2 münden. Es ist jeweils eine Aufnahme 12 für ein Einlassventil mit einer zugeordneten Aufnahmen 13 für ein Auslassventil durch eine Verbindungsbohrung 15 miteinander verbunden. Die Verbindungsbohrungen 15, die in Figur 2 mit Strichlinien eingezeichnet sind, verlaufen parallel zu den großen Seiten 3, 4 und parallel zu den Längsseiten 6, 7 des Hydraulikblocks 1 zwischen der Hauptbremszylinderbohrung 2 und der großen Seite 4, die die Aufnahmen 12, 13 für die Einlassventile und die Auslassventile aufweist, hindurch. Anschlussbohrungen 16 senkrecht zu den großen Seiten 3, 4 verbinden über die Verbindungsbohrungen 15 jeweils eine Aufnahme 12 für ein Einlassventil und eine Aufnahme 13 für ein Auslassventil mit einem Anschluss 11 für eine Radbremse.

Der Hydraulikblock 1 ist für eine Zweikreis-Fahrzeugbremsanlage mit vier Radbremsen vorgesehen und weist deswegen vier Anschlüsse 11 für Radbremsen, vier Aufnahmen 12 für Einlassventile und vier Aufnahmen 13 für Auslassventile auf.

Der Hydraulikblock 1 ist kartesisch, das heißt parallel und senkrecht zu seinen Seiten 3, 4, 5, 6, 7 und Kanten, verbohrt, wobei es einzelne schräge Bohrungen geben kann. Durch eine Verbohrung des Hydraulikblocks 1 sind die Anschlüsse 10, 11 für den Bremsflüssigkeitsvorratsbehälter und die Radbremsen, die Aufnahmen 12, 13, 14 für die Bauelemente der Schlupfregelung, die Hauptbremszylinderbohrung 2 und die Fremdkraftzylinderbohrung 8 entsprechend einem hydraulischen Schaltplan der Schlupfregelung miteinander verbunden. Die Bohrungen im Hydraulikblock 1 sind spanend hergestellt, müssen allerdings nicht gebohrt sein, sondern können beispielsweise auch gefräst oder auch nicht spanend hergestellt sein.

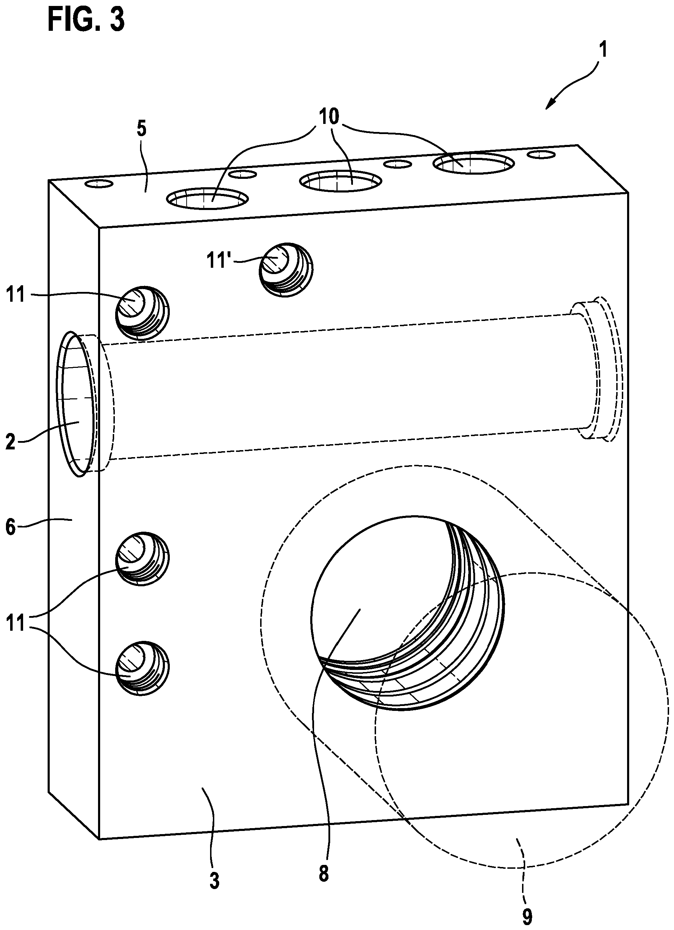

Bei dem in Figur 3 gezeichneten, erfindungsgemäßen Hydraulikblock 1 sind drei Anschlüsse 11 für Radbremsen entlang einer der beiden Längsseiten 6 anstatt entlang einer Querseite 5 angeordnet. Ein vierter Anschluss 11' für eine Radbremse ist nahe der Querseite 5 mit den Anschlüssen 10 für den Bremsflüssigkeitsvorratsbehälter und versetzt zur gegenüberliegenden Längsseite angeordnet. Der vierte Anschluss 11' befindet sich nahe der Längsmittelebene des Hydraulikblocks 1 und auf derselben Seite der Längsmittelebene wie die anderen drei Anschlüsse 11 für die Radbremsen. Im übrigen ist der Hydraulikblock 1 aus Figur 3 gleich ausgebildet wie der Hydraulikblock 1 aus Figuren 1 und 2, so dass zur Vermeidung von Wiederholungen hinsichtlich Figur 3 auf die Ausführungen zu Figuren 1 und 2 verwiesen werden kann. Bezugszahlen sind in allen Figuren übereinstimmend verwendet.

## Patentansprüche

1. Quaderförmiger Hydraulikblock für eine hydraulische Fremdkraft-Fahrzeugbremsanlage, wobei der Hydraulikblock (1) eine Hauptbremszylinderbohrung (2) und Anschlüsse (11) für hydraulische Radbremsen aufweist, die an einer großen Seite (3) des Hydraulikblocks (1) angeordnet sind, wobei
der Hydraulikblock (1) eine Aufnahme (12) für ein Einlaßventil einer Schlupfregelung und eine Aufnahme (13) für ein Auslassventil der Schlupfregelung an der der großen Seite (3), die die Anschlüsse (11) für die Radbremsen aufweist, gegenüberliegenden großen Seite (4) aufweist, die senkrecht zu der großen Seite (4) gesehen angeordnet sind,
**dadurch gekennzeichnet, dass** die Anschlüsse (11) für hydraulische Radbremsen auf der großen Seite (3) entlang einer Längsseite (6) des Hydraulikblocks (1) angeordnet sind, dass ein Anschluss (11') für eine Radbremse versetzt in Richtung einer gegenüberliegenden Längsseite (7) des Hydraulikblocks (1) an einer Querseite (5) des Hydraulikblocks (1) angeordnet ist, und dass die Aufnahmen (12) und (13) beiderseits der Hauptbremszylinderbohrung (2) angeordnet sind.

2. Hydraulikblock nach Anspruch 1, **dadurch gekennzeichnet, dass** die große Seite (3) des Hydraulikblocks (1), an der die Anschlüsse (11) für die Radbremsen angeordnet sind, zur Anbringung eines Elektromotors (9) für eine Fremdkraftbremsung vorgeshen ist und dass die Anschlüsse (11) für die Radbremsen zwischen dem Elektromotor (9) und einer Längsseite (6) oder einer Querseite (5) des Hydraulikblocks (1) angeordnet sind.

3. Hydraulkblock nach Anspruch 1, **dadurch gekennzeichnet, dass** der Hydraulikblock (1) einen Anschluß (10) für einen Bremsflüssigkeitsvorratsbehälter an einer Querseite (5) aufweist.

4. Hydraulikblock nach Anspruch 1, **dadurch gekennzeichnet, dass** der Hydraulikblock (1) eine Fremdkraftzylinderbohrung (8) in der großen Seite (3) aufweist, an der die Anschlüsse (11) für die Radbremsen angeordnet sind.

5. Hydraulikblock nach Anspruch 4, **dadurch gekennzeichnet, dass** die Hauptbremszylinderbohrung (2) parallel zu Querseiten (5) und großen Seiten (3, 4) des Hydraulikblocks (1) und zwischen der Fremdkraftzylinderbohrung (8) und einer Querseite (5) des Hydraulikblocks (1) im Hydraulikblock (1) angeordnet ist.

6. Hydraulikblock nach Anspruch 1, **dadurch gekennzeichnet, dass** die Aufnahmen (12, 13) für das Einlaßventil und das Auslaßventil durch eine Verbindungsbohrung (15), die zwischen dem Hauptbremszylinder (2) und einer großen Seite (4) des Hydraulikblocks (1) hindurch geht, verbunden sind.

7. Hydraulikblock nach Anspruch 6, **dadurch gekennzeichnet, dass** die
Verbindungsbohrung (15) der Aufnahmen (12, 13) für das Einlaßventil und das Auslaßventil durch eine Anschlussbohrung (16) senkrecht zu den großen Seiten (3, 4) des Hydraulikblocks (1) mit einem der Anschlüsse (11) für die Radbremsen verbunden ist.

## Claims

1. Cuboid hydraulic block for a hydraulic power-assisted vehicle brake system, wherein the hydraulic block (1) has a master brake cylinder bore (2) and ports (11) for hydraulic wheel brakes arranged on a large side (3) of the hydraulic block (1), wherein
the hydraulic block (1) has a receptacle (12) for an inlet valve of a slip control and a receptacle (13) for an outlet valve of the slip control on the large side (4) which lies opposite the large side (3) having the ports (11) for the wheel brakes, which are arranged perpendicular to the large side (4),
**characterized in that** the ports (11) for hydraulic wheel brakes on the large side (3) are arranged along a longitudinal side (6) of the hydraulic block (1), **in that** a port (11') for a wheel brake is arranged, offset in the direction of an opposite longitudinal side (7) of the hydraulic block (1), on a transverse side (5) of the hydraulic block (1), and **in that** the receptacles (12) and (13) are arranged on both sides of the master brake cylinder bore (2).

2. Hydraulic block according to Claim 1, **characterized in that** the large side (3) of the hydraulic block (1), on which the ports (11) for the wheel brakes are arranged, is provided for the attachment of an electric motor (9) for power-assisted braking, and **in that** the ports (11) for the wheel brakes are arranged between the electric motor (9) and a longitudinal side (6) or a transverse side (5) of the hydraulic block (1).

3. Hydraulic block according to Claim 1, **characterized in that** the hydraulic block (1) has a port (10) for a brake fluid reservoir on a transverse side (5).

4. Hydraulic block according to Claim 1, **characterized in that** the hydraulic block (1) has a power-assist cylinder bore (8) in the large side (3), on which the ports (11) for the wheel brakes are arranged.

5. Hydraulic block according to Claim 4, **characterized in that** the master brake cylinder bore (2) is arranged in the hydraulic block (1) parallel to transverse sides (5) and large sides (3, 4) of the hydraulic block (1) and between the power-assist cylinder bore (8) and a transverse side (5) of the hydraulic block (1).

6. Hydraulic block according to Claim 1, **characterized in that** the receptacles (12, 13) for the inlet valve and the outlet valve are connected by a connecting bore (15) which passes between the master brake cylinder (2) and a large side (4) of the hydraulic block (1).

7. Hydraulic block according to Claim 6, **characterized in that** the connecting bore (15) of the receptacles (12, 13) for the inlet valve and the outlet valve is connected to one of the ports (11) for the wheel brakes through a connector bore (16) perpendicular to the large sides (3, 4) of the hydraulic block (1).

## Revendications

1. Bloc hydraulique parallélépipédique pour un système de freinage hydraulique de véhicule à force externe, le bloc hydraulique (1) présentant un alésage de maître-cylindre de frein (2) et des raccords (11) pour des freins de roue hydrauliques, qui sont agencés sur un grand côté (3) du bloc hydraulique (1),
le bloc hydraulique (1) présentant un logement (12) pour une soupape d'entrée d'un système antipatinage et un logement (13) pour une soupape de sortie du système antipatinage sur le grand côté (4) opposé au grand côté (3) qui présente les raccords (11) pour les freins de roue, qui sont agencés perpendiculairement au grand côté (4),
**caractérisé en ce que** les raccords (11) pour des freins de roue hydrauliques sont agencés sur le grand côté (3) le long d'un côté longitudinal (6) du bloc hydraulique (1), **en ce qu'**un raccord (11') pour un frein de roue est agencé de manière décalée en direction d'un côté longitudinal opposé (7) du bloc hydraulique (1) sur un côté transversal (5) du bloc hydraulique (1), et **en ce que** les logements (12) et (13) sont agencés de part et d'autre de l'alésage de maître-cylindre de frein (2).

2. Bloc hydraulique selon la revendication 1, **caractérisé en ce que** le grand côté (3) du bloc hydraulique (1), sur lequel sont agencés les raccords (11) pour les freins de roue, est prévu pour le montage d'un moteur électrique (9) pour un freinage à force externe et **en ce que** les raccords (11) pour les freins de roue sont agencés entre le moteur électrique (9) et un côté longitudinal (6) ou un côté transversal (5) du bloc hydraulique (1).

3. Bloc hydraulique selon la revendication 1, **caractérisé en ce que** le bloc hydraulique (1) présente un raccord (10) pour un réservoir de liquide de frein sur un côté transversal (5).

4. Bloc hydraulique selon la revendication 1, **caractérisé en ce que** le bloc hydraulique (1) présente un alésage de cylindre à force externe (8) dans le grand côté (3), sur lequel sont agencés les raccords (11) pour les freins de roue.

5. Bloc hydraulique selon la revendication 4, **caractérisé en ce que** l'alésage de maître-cylindre de frein (2) est agencé parallèlement aux côtés transversaux (5) et aux grands côtés (3, 4) du bloc hydraulique (1) et entre l'alésage de cylindre à force externe (8) et un côté transversal (5) du bloc hydraulique (1) dans le bloc hydraulique (1).

6. Bloc hydraulique selon la revendication 1, **caractérisé en ce que** les logements (12, 13) pour la soupape d'entrée et la soupape de sortie sont reliés par un alésage de liaison (15) qui passe entre le maître-cylindre de frein (2) et un grand côté (4) du bloc hydraulique (1).

7. Bloc hydraulique selon la revendication 6, **caractérisé en ce que** l'alésage de liaison (15) des logements (12, 13) pour la soupape d'entrée et la soupape de sortie est relié à l'un des raccords (11) pour les freins de roue par un alésage de raccordement (16) perpendiculaire aux grands côtés (3, 4) du bloc hydraulique (1).
